# EUROPÄISCHE PATENTSCHRIFT

(11) **EP 1 227 011 B1**
(45) Veröffentlichungstag und Bekanntmachung des Hinweises auf die Patenterteilung: **26.01.2005**
(21) Anmeldenummer: 01127811.6
(22) Anmeldetag: 22.11.2001
(51) Int. Cl.: B60R 21/13

(54) **Überrollschutzsystem für Kraftfahrzeuge**
Rollbar protection system for motor vehicles
Système d'arceau de sécurité pour véhicules automobiles

(30) Priorität: 25.01.2001 DE 10103247
(43) Veröffentlichungstag der Anmeldung: 31.07.2002
(73) Patentinhaber: ISE Innomotive Systems Europe GmbH, 51702 Bergneustadt (DE)
(72) Erfinder: Berges, Stephan, 51647 Gummersbach (DE); Nowack, Reinhard, 57489 Drolshagen (DE); Janisch, Mirko, 53797 Lohmar (DE); Flick, Andrea, 53844 Troisdorf (DE)
(74) Vertreter: Fuchs Mehler Weiss & Fritzsche

(56) Entgegenhaltungen:
- DE-A- 19 523 790
- DE-A- 19 709 908
- DE-A- 19 750 457
- DE-C- 19 838 989
- DE-C- 19 910 424
- DE-C- 19 925 520

## Beschreibung

Die Erfindung bezieht sich auf ein Überrollschutzsystem, gemäß den Oberbegriff der Anspruchs 1.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem fahrzeugfesten Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist.

Eine derartige gattungsgemäße Kassetten-Konstruktion eines Überrollbügelschutzsystems zeigt beispielsweise die DE 43 42 400 A 1.

Dieses bekannte Überrollschutzsystem weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Dabei ist jedem Fahrzeugsitz eine derartige Kassette zugeordnet. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, im Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Neben einer guten Führung des Überrollkörpers, die die bei einem Überschlag auftretenden Kräfte aufzunehmen in der Lage ist, kommt es in Bezug auf die Sicherheit des Überrollbügelsystems auch auf die konstruktive Gestaltung der Verriegelungseinrichtung an. Beim Stand der Technik besteht die eine Komponente der Verriegelungseinrichtung typischerweise aus einer schwenkbar angelenkten, federvorgespannten Rastklinke mit mehreren, typischerweise drei, Zahnsegmenten. Wegen der konstruktionsbedingt begrenzten Länge der Rastklinke kommen bei der Verschwenkung der Rastklinke geometriebedingt nicht alle Zähne der Zahnsegmente gleichzeitig in Wirkeingriff mit der zweiten Verriegelungskomponente, der Zahnleiste oder dem Rastdorn. Dadurch ist die Kraftaufnahme im Überschlagfall ungleichmäßig auf die Zahnsegmente verteilt, was eine entsprechend starke mechanische Dimensionierung der Zahnsegmente notwendig macht.

Der Erfindung liegt die Aufgabe zugrunde, das eingangs bezeichnete Überrollschutzsystem hinsichtlich der Verriegelungseinrichtung so auszubilden, daß die bei einem Überschlag auf den Überrollkörper auftretenden Kräfte bei gleichmäßiger Belastung der Verriegelungskomponenten in die Befestigung des Systems im Fahrzeug abgeleitet werden, bei geringen Baumaßen dieser Verriegelungs-Einrichtung.

Die Lösung dieser Aufgabe gelingt ausgehend von
- einem Überrollkörper, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und mit
- einer Verriegelungseinrichtung für das Verriegeln des ausgefahrenen Überrollkörpers gegen ein ungewolltes Wiedereinfahren, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen,
gemäß der Erfindung dadurch, daß eine Verriegelungskomponente des Überrollbügels durch einen schräg zur Verfahrrichtung des Überrollbügels linear geführten federvorgespannten Verriegelungs-Schieber mit mehreren stirnseitig vorgesehenen Zahnsegmenten gebildet ist und die andere Verriegelungskomponente aus einem sich in Verfahrrichtung des Überrollkörpers erstreckenden mit mehreren komplementäre Zahnsegmenten versehenen, Verriegelungskörper besteht.

Durch die lineare Führung des Verriegelungsschiebers mit Zahnsegmenten kommen diese stets gleichzeitig in Wirkeingriff mit den Zahnsegmenten des anderen Verriegelungselementes, der Zahnleiste oder des Rastdornes. Sie werden dadurch gleichmäßig bei Lastaufnahme belastet. Durch die Schrägführung entsteht ferner bei Lastaufnahme eine Kraftkomponente, die die Zahnsegmente des Verriegelungsschiebers hin zu dem anderen Verriegelungselement drückt. Dadurch erhöht sich mit steigender Last die Verriegelungskraft, d.h. die erfindungsgemäße Verriegelungseinrichtung ist selbstverstärkend. Ferner zieht dadurch das zweite Verriegelungselement, wenn in infolge der Lastaufnahme, d.h. dem seitlichen Verriegelungsdruck, etwas ausweicht, den Verriegelungsschieber hinter sich her, wodurch die beiden Verriegelungskomponenten stets optimal im Eingriff sind. Hierdurch ist eine relativ sehr hohe Belastungsaufnahme des Systems möglich.

Ein weiterer Vorteil besteht darin, daß die erfindungsgemäße Verriegelung mit dem linear geführten Verriegelungsschieber nur einen relativ geringen Bauraum benötigt.

Die Schräge der Führung wird der Fachmann je nach den konstruktiven Gegebenheiten entsprechend wählen, damit ein optimaler Wirkeingriff zwischen den zueinander komplementären Zahnsegmenten stattfindet. Bei der typischen Ausbildung der Zahnsegmente mit horizontalen Wirkflächen ist es gemäß einer Ausgestaltung der Erfindung vorteilhaft, das Verriegelungssystem so auszubilden, daß der Verriegelungs-Schieber unter einem Winkel von 45° geneigt zur Verfahrrichtung des Überrollbügels geführt ist. Dadurch liegen die Wirkflächen vollflächig an und ermöglichen eine optimale Kraftübertragung.

Die Anzahl der Zahnsegmente des Verriegelungsschiebers bestimmt sich nach der geforderten Lastaufnahmefähigkeit. Gemäß einer Ausgestaltung der Erfindung ist vorgesehen, daß der Verriegelungs-Schieber mindestens drei Zahnsegmente aufweist.

Für die Ausbildung der zweiten Verriegelungskomponente, des sich in Verfahrrichtung des Überrollkörpers mit seinen komplementären Zahnsegmenten erstreckenden Verriegelungskörpers, stehen dem Fachmann mehrere konstruktive Lösungen zur Verfügung.

Gemäß einer ersten Ausgestaltung kann dieser Verriegelungskörper durch eine Zahnleiste gebildet werden.

Besondere Vorteile werden erreicht, wenn der sich in Verfahrrichtung des Überrollkörpers mit seinen komplementären Zahnsegmenten erstreckende Verriegelungskörper durch einen Rastdorn mit mehreren übereinanderliegenden, umlaufenden Ausnehmungen gebildet ist. Ein derartiger Rastdorn ist insbesondere aus der DE P 43 42 400.7 C2 bekannt, und wird dort ausführlich einschließlich der durch ihn erreichten Vorteile beschrieben, so daß hier darauf Bezug genommen wird.

Eine Komponente der Verriegelungseinrichtung muß prinzipbedingt fahrzeugfest angebracht sein, während die andere Komponente mit dem Überrollkörper in Verbindung steht.

Gemäß einer ersten Ausgestaltung der Verriegelungseinrichtung kann diese so ausgebildet sein, daß der Verriegelungsschieber fahrzeugfest angebracht ist und der sich in Verfahrrichtung erstreckende Verriegelungskörper mit dem Überrollkörper verbunden ist. Diese Ausgestaltung hat sowohl konstruktive (Bauraum) als auch kinematische Vorteile. Prinzipiell ist es jedoch gemäß einer weiteren Ausgestaltung der Erfindung möglich, daß der Verriegelungsschieber mit dem Überrollkörper verbunden ist und der sich in Verfahrrichtung erstreckende Verriegelungskörper fahrzeugfest angebracht ist.

Die erfindungsgemäße Verriegelungseinrichtung kann in den unterschiedlichst ausgebildeten Überrollschutzsystemen Anwendung finden. Mit besonderem konstruktivem Vorteil findet sie Anwendung bei einem Überrollschutzsystem mit
- einem fahrzeugfest anbringbaren kassettenartigen Gehäuse, das die Kassettentiefe vorgebende Seitenwände besitzt,
- einem U-förmigen Überrollbügel, bestehend aus einem gekrümmten Abschnitt und zwei parallelen Schenkelrohren, die jeweils eine geschlossene Mantelfläche besitzen, und deren offene Enden über eine biegesteife Traverse miteinander verbunden sind, und
- einem am oberen Ende des Gehäuses an den Seitenwänden angebrachten Führungsblock, der Führungsöffnungen zur äußeren Führung der Schenkelrohre besitzt,
wenn der Verriegelungsschieber im Führungsblock und der sich in Verfahrrichtung erstreckende Verriegelungskörper auf der Traverse angebracht ist.

Überrollschutzsysteme der vorbeschriebenen Art erfahren während der Fertigung und später betrieblich zu Testzwecken eine gewollte Auslösung. Um die Systeme wieder in den Ausgangszustand zu bringen, d.h. den Überrollkörper zu reversieren, ist ein Aufheben der Verriegelung notwendig, was typischerweise manuell geschieht, beispielsweise bei der bekannten Verriegelungsklinke mittels eines angeformeten Handhebels. Um bei dem erfindungsgemäßen Verriegelungssystem ein Reversieren zu ermöglichen, ist es so ausgebildet, daß an dem Verriegelungsschieber ein von außen zwecks Reversieren des Systems betätigbaren Seilzug vorgesehen ist.

Anhand eines in der Zeichnung dargestellten Ausführungsbeispieles wird die Erfindung näher beschrieben.

Es zeigen:
- Fig. 1: in einer isometrischen Darstellung den Gesamtaufbau eines Überrollbügelschutzsystems, mit einem Kassettengehäuse, das U-förmige Seitenprofile aufweist, an denen ein Führungsblock für die Schenkelrohre des Überrollbügels fest angebracht und in denen eine, die Schenkel des Überrollbügels verbindende Traverse geführt ist, wobei in dem Führungsblock die eine Komponente des erfindungsgemäßen Verriegelungssystems, eine mit Zahnsegmenten versehener Verriegelungsschieber untergebracht ist, und an der Traverse die andere Verriegelungskomponente, ein Rastdorn, befestigt ist,
- Fig. 2: in einem Ausschnitt aus Fig. 1 in Form einer schematisierten Längsschnitt-Darstellung den im Führungsblock untergebrachten Verriegelungsschieber im verriegelnden Wirkeingriff mit dem an der Traverse befestigten Rastdorn, und
- Fig. 3: in einer Ausschnitt-Darstellung entsprechend Fig. 2 den Zustand des Verriegelungssystems, in dem der Verriegelungsschieber zwecks Reversieren des Überrollschutzsystems außer Wirkeingriff mit dem Rastdorn ist.

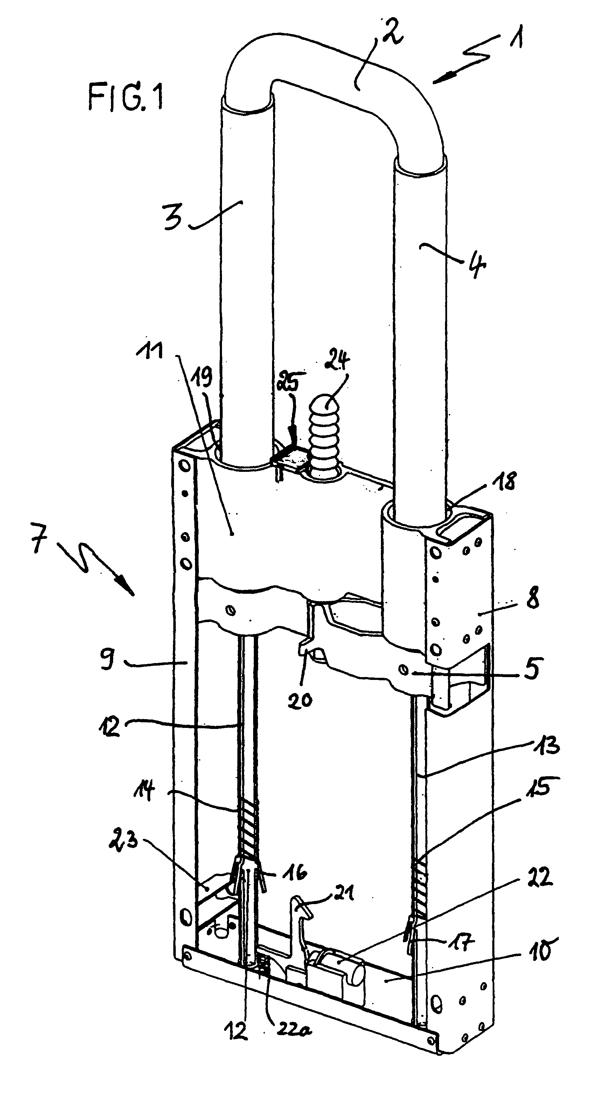

Die Figur 1 zeigt in einer isometrischen Darstellung den prinzipiellen Aufbau eines mit dem erfindungsgemäßen Verriegelungssystems versehenen Überrollschutzsystems, wobei Teile weggebrochen sind. In Figur 1 ist dabei der ausgefahrene Zustand dargestellt.

Dieses System weist zunächst einen U-förmigen Überrollbügel 1 auf, welcher aus drei Rohren 2, 3, 4 zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelrohre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen zur Aufnahme der Schenkelrohre 3, 4 aufweist, in denen sie befestigt sind.

Der Überrollbügel 1 ist mit seinen beiden Schenkelrohren 3, 4, die eine geschlossene Mantelfläche aufweisen, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen Führungsblock 11 miteinander verbunden, z.B. durch Nieten, Schrauben, Verschweißen oder dergleichen.

Im Bodenblech 10 sind zwei Federführungsbolzen 12, 13 verankert, auf denen vorspannbare Druckfedern 14, 15 zum Ausfahren des Überrollbügels 1 im Gefahrenfall, bzw. bei Handauslösung aufgeschoben sind und die die Schenkelrohre führen.

An den Federführungsbolzen 12, 13 ist jeweils mindestens ein Satz gespreizter Zentrierarme 16, 17 angebracht, vorzugsweise einstückig angeformt, die einen gleichmäßigen Abstand zwischen der zugehörigen Druckfeder 14, 15 und dem zugeordneten Schenkelrohr 3, 4 sichern, was sich mit Vorteil auch geräuschmindernd auswirkt.

Es ist auch denkbar, die Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt zwei Führungsbohrungen 18, 19, die die Mantelfläche der Schenkelrohre 3, 4 seitlich abstützen und eine sehr weit tolerierte Führung für die sich längs der Führungsbohrungen 18, 19 bewegenden Schenkelrohre 3, 4 bieten. Am oberen, dem gekrümmten Rohr 2 zugewandten Ende der Führungsbohrungen 18, 19 ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen 18, 19 ausgeglichen wird. Zusätzlich ist für die Schenkelrohre noch eine innere Führung vorgesehen, die durch die erwähnten gehäusefesten Federführungsbolzen bzw. Standrohre gewährleistet ist.

Um den Überrollbügel 1 in seiner (nicht dargestellten) unteren Position, der Ruhelage, gegen die Kraft der dann vorgespannten Druckfedern 14, 15 halten zu können, ist an der Traverse 5 eine Haltenase 20 angebracht, vorzugsweise einstückig angeformt, die in Wirkeingriff mit einer im Bodenteil schwenkbar angelenkten, mittels einer Feder 22 a im Uhrzeigersinn vorgespannten Halteklinke 21 bringbar ist. Bei abgesenktem Überrollbügel 1, und damit auch bei abgesenkter Traverse 5, umfaßt die Halteklinke 21 die Haltenase 20 und hält den Überrollbügel in dieser Ruhelage. Ein Distanzstück 23, das jeweils in den Seitenprofilen 8, 9 befestigt ist, begrenzt dabei die Verschiebbarkeit der Traverse 5 nach unten und gibt somit die Ruhelage vor. Ferner wird durch das Distanzstück 23 beim Verschrauben der Kassette im Fahrzeug eine Deformation der Seitenprofile vermieden.

Am Bodenteil 10 ist weiterhin ein sensorgesteuertes Auslösesystem 22 fest angebracht, das vorzugsweise durch ein pyrotechnisches Auslöseelement gebildet, das sicherer als ein üblicher Auslösemagnet die relativ hohe Auflagekraft der Halteklinke 21 auf der Haltenase 20 überwinden kann.

Auf der Traverse 5 ist in an sich bekannter Weise, wie in der eingangs zitierten DE 43 42 400 A1 näher beschrieben, ein Rastdorn 24 befestigt, der in der oberen Stellung mit einem Verriegelungsschieber 25, der im Führungsblock 11 schräg geführt gehaltert ist, verriegelnd in Wirkeingriff bringbar ist, um ein ungewolltes Eindrücken des Überrollbügels in einer ausgefahrenen Position zu verhindern.

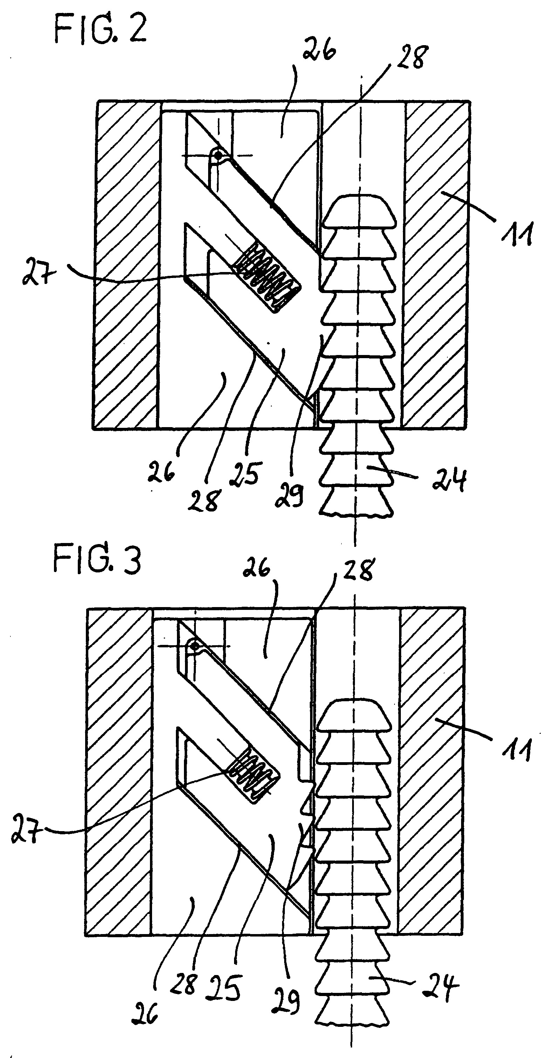

Dieser Verriegelungsschieber 25 ist in den Ausschnitt-Darstellungen nach den Figuren 2 und 3 näher dargestellt.

Im dem Führungsblock 11 ist ein Gehäuse mit einer Schrägführung 28 ausgebildet, in der der Verriegelungsschieber 25, der an seiner vorderen Stirnseite drei Zahnsegmente 29 besitzt, unter einem Winkel von 45° zur Vertikalen, d.h. zur Verfahrrichtung des Überrollkörpers 1, geführt ist. Eine im Inneren des Verriegelungsschiebers angebrachte Feder 27 sorgt für die notwendige Vorspannung, damit die Zahnsegmente 29 des Verriegelungsschiebers 25 stets im Wirkeingriff mit den komplementären Hinterschneidungen des Rastdornes 24 sind. Dabei gelangen mit Vorteil alle Zahnsegmente gleichzeitig in gegenseitigen Wirkeingriff. Dieser verriegelte Wirkeingriff ist in der Fig. 2 dargestellt.

Bei einer Aufstellung des Überrollkörpers 1 nach einer Auslösung fährt der Rastdorn 24 von unten in den Führungsblock 11 ein und ratscht bis zur Erreichung der Endstellung an den Zahnsegmenten 29 vorbei, indem er sie gegen die Kraft der Feder 27 wegdrückt. Der besondere Vorteil des langestreckten Rastdornes 24 ist dabei, daß er bereits verriegelt, auch wenn der Überrollbügel noch nicht ganz seine obere Position erreicht hat.

Bei externer Belastung auf den Überrollbügel, kommt die Verzahnung voll zum Tragen, weil die Zahnsegmente infolge des horizontalen Hinterschnittes und der 45°-Schräge flächig aufeinander liegen. Der Rastdorn kann infolge seiner Führung dem seitlichen Druck nur minimal ausweichen, bis er an der ihn umfassenden Wandung im Führungsblock zur Anlage kommt. Der Verriegelungsschieber wird auf Grund der entlang der Führung wirkenden Kraftkomponente und seiner Verzahnungsgeometrie, diesen Weg nachgezogen und bleibt so immer optimal im Eingriff. Hierdurch ist eine relativ sehr hohe Belastungsaufnahme des Systems möglich.

Das Verriegelungssystem ist vorzugsweise so gestaltet, daß der Rastdorn 24 in oberster Position des Bügels nicht aus dem Führungsblock nach oben herausragt. Diese Gestaltung ist in den Figuren 2,3 dargestellt, die insoweit gegenüber der Darstellung in der Fig. 1 modifiziert sind. Damit wird den Fahrzeugen und den Ländern Rechnung getragen, bei denen der Sicherheitsgurt für die Kindersitze durch den Bügel verläuft. Desweiteren sind Verletzungen durch einen eventuellen Aufprall des Kopfes auf den Rastdorn ausgeschlossen.

Zur Reservierung des Systems nach einem gewollten Ausfahren des Überrollbügels, wird der Verriegelungsschieber über einen (nicht dargetellten) Seilzug aus der Verzahnung herausgezogen. Dieser entriegelte Zustand ist in der Fig. 3 dargestellt. Der Überrollbügel kann dann manuell eingeschoben werden.

## Patentansprüche

1. Überrollschutzsystem für Kraftfahrzeuge, mit
- einem Überrollkörper (1), der in einer fahrzeugfesten Führungseinheit (7) geführt aufgenommen ist, und der im Normalzustand gegen die Kraft von mindestens einer vorgespannten Antriebs-Druckfeder (14,15) durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und mit
- einer Verriegelungseinrichtung für das Verriegeln des ausgefahrenen Überrollkörpers (1) gegen ein ungewolltes Wiedereinfahren, bestehend aus zwei Verriegelungskomponenten, von denen eine fahrzeugfest angebracht und die andere mit dem Überrollkörper (1) verbunden ist, und die Rastelemente besitzen, die in der ausgefahrenen Stellung des Überrollkörpers (1) im verriegelnden Wirkeingriff stehen, wobei
- die eine Verriegelungskomponente (25) federvorgespannt ist und mehrere Zahnsegmente (29) aufweist und die andere Verriegelungskompomente (24) aus einem sich in Verfahrrichtung des Überrollkörpers (1) erstreckenden, mit mehreren komplementären Zahnsegmenten versehenen Verriegelungskörper (24) besteht,
**dadurch gekennzeichnet, daß** die eine Verriegelungskomponente durch einen schräg zur Verfahrrichtung des Überrollbügels (1) linear geführten Verriegelungsschieber (25) mit stirnseitig vorgesehenen Zahnsegmenten (29) gebildet ist.

2. Überrollschutzsystem nach Anspruch 1, **dadurch gekennzeichnet, daß** der Verriegelungsschieber (25) unter einem Winkel von 45° geneigt zur Verfahrrichtung des Überrollbügels (1) geführt ist.

3. Überrollschutzsystem nach Anspruch 1 oder 2, **dadurch gekennzeichnet, daß** der Verriegelungsschieber (25) mindestens drei Zahnsegmente (29) aufweist.

4. Überrollschutzsystem nach einem der Ansprüche 1 bis 3, **dadurch gekennzeichnet, daß** der sich in Verfahrrichtung des Überrollkörpers (1) mit seinen komplementären Zahnsegmenten erstreckende Verriegelungskörper durch eine Zahnleiste gebildet ist.

5. Überrollschutzsystem nach einem der Ansprüche 1 bis 3, **dadurch gekennzeichnet, daß** der sich in Verfahrrichtung des Überrollkörpers (1) mit seinen komplementären Zahnsegmenten erstreckende Verriegelungskörper durch einen Rastdorn (24) mit mehreren übereinanderliegenden, umlaufenden Ausnehmungen gebildet ist.

6. Überrollschutzsystem nach einem der Ansprüche 1 bis 5, **dadurch gekennzeichnet, daß** der Verriegelungsschieber (25) fahrzeugfest angebracht ist und der sich in Verfahrrichtung erstreckende Verriegelungskörper (24) mit dem Überrollkörper (1) verbunden ist.

7. Überrollschutzsystem nach einem der Ansprüche 1 bis 5, **dadurch gekennzeichnet, daß** der Verriegelungsschieber (25) mit dem Überrollkörper (1) verbunden ist und der sich in Verfahrrichtung erstreckende Verriegelungskörper (24) fahrzeugfest angebracht ist.

8. Überrollschutzsystem nach Anspruch 6, mit
- einem fahrzeugfest anbringbaren kassettenartigen Gehäuse (7), das die Kassettentiefe vorgebende Seitenwände (8,9) besitzt,
- einem U-förmigen Überrollbügel (1), bestehend aus einem gekrümmten Abschnitt (2) und zwei parallelen Schenkelrohren (3,4), die jeweils eine geschlossene Mantelfläche besitzen, und deren offene Enden über eine biegesteife Traverse (5) miteinander verbunden sind, und
- einem am oberen Ende des Gehäuses (7) an den Seitenwänden angebrachten Führungsblock (11), der Führungsöffnungen (18,19) zur äußeren Führung der Schenkelrohre (2,3) besitzt,
**dadurch gekennzeichnet, daß** der Verriegelungsschieber (25) im Führungsblock (11) und der sich in Verfahrrichtung erstreckende Verriegelungskörper (24) auf der Traverse (5) angebracht ist.

9. Überrollschutzsystem nach einem der Ansprüche 1 bis 8, **dadurch gekennzeichnet, daß** an dem Verriegelungsschieber (25) ein von außen zwecks Reversieren des Systems betätigbarer Seilzug vorgesehen ist.

## Claims

1. Rollover protection system for motor vehicles, having
- a rollover body (1) which is held in a manner such that it is guided in a guide unit (7) secured on the vehicle and which, in the normal state, can be retained in a lower, retracted rest position by means of a retaining device counter to the force of at least one prestressed driving compression spring (14, 15), and, by release of the retaining device, can be brought by the spring force of the driving compression spring into an upper, protective position, and having
- a locking device for locking the extended rollover body (1) against inadvertently being retracted again, comprising two locking components, of which one is attached in a manner secured on the vehicle and the other is connected to the rollover body (1), and which have latching elements which are in locking active engagement in the extended position of the rollover body (1),
- one locking component (25) being prestressed by a spring and having a plurality of toothed segments (29), and the other locking component (24) comprising a locking body (24) which extends in the moving direction of the rollover body (1) and is provided with a plurality of complementary toothed segments,
**characterized in that** one locking component is formed by a locking slide (25) which is guided linearly obliquely with respect to the moving direction of the rollover bar (1) and has toothed segments (29) provided on the end side.

2. Rollover protection system according to Claim 1, **characterized in that** the locking slide (25) is guided in a manner such that it is inclined at an angle of 45° with respect to the moving direction of the rollover bar (1).

3. Rollover protection system according to Claim 1 or 2, **characterized in that** the locking slide (25) has at least three toothed segments (29).

4. Rollover protection system according to one of Claims 1 to 3, **characterized in that** the locking body which extends with its complementary toothed segments in the moving direction of the rollover body (1) is formed by a toothed strip.

5. Rollover protection system according to one of Claims 1 to 3, **characterized in that** the locking body which extends with its complementary toothed segments in the moving direction of the rollover body (1) is formed by a latching peg (24) having a plurality of peripheral recesses situated one above another.

6. Rollover protection system according to one of Claims 1 to 5, **characterized in that** the locking slide (25) is attached in manner secured on the vehicle and the locking body (24), which extends in the moving direction, is connected to the rollover body (1).

7. Rollover protection system according to one of Claims 1 to 5, **characterized in that** the locking slide (25) is connected to the rollover body (1) and the locking body (24), which extends in the moving direction, is attached in a manner secured on the vehicle.

8. Rollover protection system according to Claim 6, having
- a cassette-like housing (7) which can be attached in a manner secured on the vehicle and which has side walls (8, 9) predetermining the depth of the cassette,
- a U-shaped rollover bar (1), comprising a curved section (2) and two parallel leg tubes (3, 4) which each have a closed casing surface, and the open ends of which are connected to each other via a flexurally rigid crosspiece (5), and
- a guide block (11) which is attached to the side walls at the upper end of the housing (7) and has guide openings (18, 19) for the external guidance of the leg tubes (2, 3),
**characterized in that** the locking slide (25) is attached in the guide block (11) and the locking body (24), which extends in the moving direction, is attached on the crosspiece (5).

9. Rollover protection system according to one of Claims 1 to 8, **characterized in that** a cable pull which can be actuated from the outside for the purpose of reversing the system is provided on the locking slide (25).

## Revendications

1. Système d'arceau de sécurité pour véhicules automobiles, qui comprend:
- un corps (1) d'arceau de sécurité qui est reçu de manière guidée dans une unité de guidage (7) fixée au véhicule et qui, à l'état normal, peut être maintenu à l'aide d'un dispositif de retenue dans une position inférieure rétractée de repos en opposition à la force d'au moins un ressort de poussée d'entraînement (14, 15) précontraint, et peut être amené dans une position supérieure de protection par libération du dispositif de maintien par la force du ressort de poussée d'entraînement, ainsi que
- un dispositif de verrouillage pour verrouiller le corps (1) d'arceau de sécurité déployé et empêcher qu'il se rétracte de manière intempestive, constitué de deux composants de verrouillage dont l'un est fixé sur le véhicule et l'autre est relié au corps (1) de l'arceau de sécurité, et qui présente des éléments d'encliquetage qui coopèrent à verrouillage lorsque le corps (1) de l'arceau de sécurité est en position déployée,
- l'un des composants de verrouillage (25) étant précontraint par un ressort et présentant plusieurs segments dentés (29) et l'autre composant de verrouillage (24) étant constitué d'un corps de verrouillage (24) qui s'étend dans la direction de déploiement du corps (1) de l'arceau de sécurité et est doté de plusieurs segments dentés complémentaires,
**caractérisé en ce que** l'un des composants de verrouillage est formé par un coulisseau de verrouillage (25) guidé linéairement et obliquement par rapport à la direction de déploiement de l'arceau de sécurité (1) et doté de segments dentés (29) prévus sur son côté frontal.

2. Système d'arceau de sécurité selon la revendication 1, **caractérisé en ce que** le coulisseau de verrouillage (25) est guidé sous un angle oblique de 45° par rapport à la direction de déploiement de l'arceau de sécurité (1).

3. Système d'arceau de sécurité selon les revendications 1 ou 2, **caractérisé en ce que** le coulisseau de verrouillage (25) présente au moins trois segments dentés (29).

4. Système d'arceau de sécurité selon l'une des revendications 1 à 3, **caractérisé en ce que** le corps de verrouillage qui s'étend avec ses segments dentés complémentaires dans la direction de déploiement du corps (1) de l'arceau de sécurité est formé par une crémaillère.

5. Système d'arceau de sécurité selon l'une des revendications 1 à 3, **caractérisé en ce que** le corps de verrouillage qui s'étend avec ses segments dentés complémentaires dans la direction de déploiement du corps (1) de l'arceau de sécurité est formé d'un mandrin d'encliquetage (24) doté de plusieurs découpes périphériques superposées.

6. Système d'arceau de sécurité selon l'une des revendications 1 à 5, **caractérisé en ce que** le coulisseau de verrouillage (25) est fixé sur le véhicule et **en ce que** le corps de verrouillage (24) qui s'étend dans la direction de déploiement est relié au corps (1) de l'arceau de sécurité.

7. Système d'arceau de sécurité selon l'une des revendications 1 à 5, **caractérisé en ce que** le coulisseau de verrouillage (25) est relié au corps (1) de l'arceau de sécurité et **en ce que** le corps de verrouillage (24) qui s'étend dans la direction du déploiement est fixé au véhicule.

8. Système d'arceau de sécurité selon la revendication 6, qui présente:
- un boîtier (7) en forme de cassette qui peut être installé fixement sur le véhicule et qui possède des parois latérales (8, 9) qui déterminent la profondeur de la cassette,
- un arceau de sécurité (1) en forme de U, constitué d'une partie courbe (2) et de deux tubes latéraux parallèles (3, 4) qui possèdent chacun une surface d'enveloppe fermée et dont les extrémités ouvertes sont reliées l'une à l'autre part une traverse (5) rigide en flexion et
- un bloc de guidage (11) installé sur les parois latérales à l'extrémité supérieure du boîtier (7) et qui possède des ouvertures de guidage (18, 19) pour le guidage extérieur des tubes latéraux (2, 3),
**caractérisé en ce que** le coulisseau de verrouillage (25) est installé dans le bloc de guidage (11) et **en ce que** le corps de verrouillage (24) qui s'étend dans la direction du déploiement est installé sur la traverse (5).

9. Système d'arceau de sécurité selon l'une des revendications 1 à 8, **caractérisé en ce qu'**un câble de traction qui peut être actionné pour inverser le système est prévu sur le coulisseau de verrouillage (25).
